# EUROPEAN PATENT SPECIFICATION

(11) **EP 0 655 193 B1**
(45) Date of publication and mention of the grant of the patent: **09.02.2000**
(21) Application number: 94203390.3
(22) Date of filing: 22.11.1994
(51) Int. Cl.: A01J 7/00

(54) **A construction for automatically milking animals**
Gerät zum automatischen Melken von Tieren
Dispositif de traite automatique d'animaux

(30) Priority: 26.11.1993 NL 9302047
(43) Date of publication of application: 31.05.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 229 682
- EP-A- 0 565 189

## Description

The invention relates to a construction for milking animals, such as cows, according to the preamble of claim 1.

A construction of this type is described in EP-A-0 565 189. In this construction the pair of teat cups is pivotal as a whole in a horizontal plane relative to the robot arm; in addition the two teat cups are simultaneously movable in a lateral direction with respect to the longitudinal direction of an animal. Such a construction is disadvantageous because the movement of the teat cups is restricted and the teat cups cannot move independently. EP-A-0 207 572 describes teat cups which are individually pivotal by means of hinges driven by electromotors. NL 8502082 relates to teat cups which are individually attached to the robot arm via pivotally interconnected arms. NL 8500091 describes teat cups which are individually and pivotally attached to a central pivot point. Finally, NL 8500694 relates to teat cups which are individually pivotal and driven by a cylinder. Although, these constructions allow individual movement of the teat cups, these constructions are complicated, inefficient and expensive.

The invention has for its object to provide a construction of the above-mentioned type, in which the teat cups can be easily adjusted in various positions independently of each other and which consists in a simple construction.

According to the invention, this is achieved in that two teat cups are interconnected by means of a hinge, one of the two teat cups being pivotally attached to a robot arm by means of two pivotally interconnected arms. Thus, a flexible robot arm is obtained, in which the teat cups can be adjusted to various positions relative to each other. In accordance with a still further feature of the invention, the pivotal arm, which is not directly connected to the robot arm, extends in a horizontal plane. As a result thereof, the teat cup arranged nearest to the robot arm can be pivoted to a position relatively close to the robot arm, without it being obstructed by the pivotal arm.

In order to achieve that the teat cups can be accurately positioned to the teats, one pair of teat cups is connected, in accordance with the invention, to the robot arm via one pivotal arm construction, a pivotal arm construction being further provided with electric motors, with the aid of which the position of the relevant teat cups can be altered in a mainly horizontal plane.

In accordance with a still further feature of the invention, the milking robot includes detection means, such as a laser, with the aid of which the position of the teats of an animal to be milked is determined, on the basis of which data the position of the teat cups can be altered, using the pivotal arm construction.

In accordance with a still further feature of the invention, the construction is characterized in that a pivotal arm, by means of which a teat cup is pivoted, is connected to a stepping motor, whilst the shaft of the stepping motor is connected to a pivotal arm other than the said first arm. Thus, the pivotal arms are interconnected, whilst the construction remains flexible.

In accordance with a further feature of the invention, each of the stepping motors includes a free-wheel device, which becomes operative for a stepping motor after a computer has supplied a signal indicating that a relevant teat cup has been connected. Consequently, a teat cup connected to a teat can continue to track the relevant teat when it changes position, e.g. because the animal moves to a slightly different position. Thus it is prevented that the teat cup may be disconnected.

In accordance with a still further feature of the invention, the construction includes an operating cylinder, with the aid of which the teat cups can be connected to the teats simultaneously. In order to obtain a rugged construction, the pivotal arms are constituted, in accordance with a still further feature of the invention, by two spaced-apart strips, whilst, in accordance with a still further feature of the invention, a stepping motor is disposed between these strips at least one end of a pair of strips. Since the stepping motor is arranged between the strips, it is less vulnerable to damage, whilst the overall height of the robot arm remains relatively small. In accordance with a further feature of the invention, the robot arm is fitted with four teat cups, two teat cups of which each include two pairs of strips.

In accordance with a still further feature of the invention, the strips have one end connected to a holder surrounding the teat cup. In accordance with a further feature of the invention, the holder is of a cylindrical shape and is provided near the centre point around a teat cup, the length of the holder being less-than the length of a teat cup. In accordance with an other feature of the invention, a teat cup is movable in height relative to an associated holder. This motion can, in accordance with a feature of the invention, be effected against the action of a spring. If the front and rear teat are positioned at different heights, it is possible during the upward movement of the teat cups to bridge this difference in height by compressing one of the teat cups and, in spite of the difference in height, a correct connection to the two teats is always effected. So as to ensure a smooth and permanent displacement of a teat cup relative to the associated holder, a sleeve bearing is rigidly connected, in accordance with a further feature of the invention, to the holder near the lower side thereof, and nearer to the top a further sleeve bearing is rigidly connected to the teat cup, while a compression spring is confined between the sleeve bearings. According to the invention, the sleeve bearings are preferably lined with Teflon.

In accordance with a still further feature of the invention, the robot arm includes a first portion which is pivotal about an upwardly extending shaft, as well as a second portion which is arranged at a substantially square angle to the first portion and a third portion which is pivotal about an upwardly extending shaft and is connected to the other end of the second portion. In accordance with an other feature of the invention, there are arranged between the second portion and the third portion of the robot arm adjusting means which include a stepping motor driving an eccentric which via an arm is connected to a portion of the robot arm other than a robot arm portion to which the stepping motor is attached. With the aid of the stepping motor the third portion of the robot arm can be rotated about an upright shaft relative to the second portion of the robot arm, so that the udder is still better accessible. In accordance with a further feature of the invention, the detection means are disposed on the third portion of the robot arm.

For a better understanding of the invention and to show how the same may be carried into effect, reference will now be made, by way of example, to the accompanying drawings, in which:
Figure 1 is a plan view of a milking box containing a milking robot and the contours of a milch animal, in the present case a cow;
Figure 2 shows, to an enlarged scale, the end of the milking robot of Figure 1, a pair of teat cups being connected via one pivotal arm construction to the end of the robot arm;
Figure 3 is a side view of the end of the robot arm, taken on the line III-III in Figure 2;
Figure 4 is a longitudinal cross-sectional view of a teat cup with a holder;
Figure 5 is a plan view of a second embodiment of a milking box with a robot arm and detection means;
Figure 6 is a side view of the milking box as shown in Figure 5, and
Figure 7 shows a detail of the detection means as shown in Figures 5 and 6.

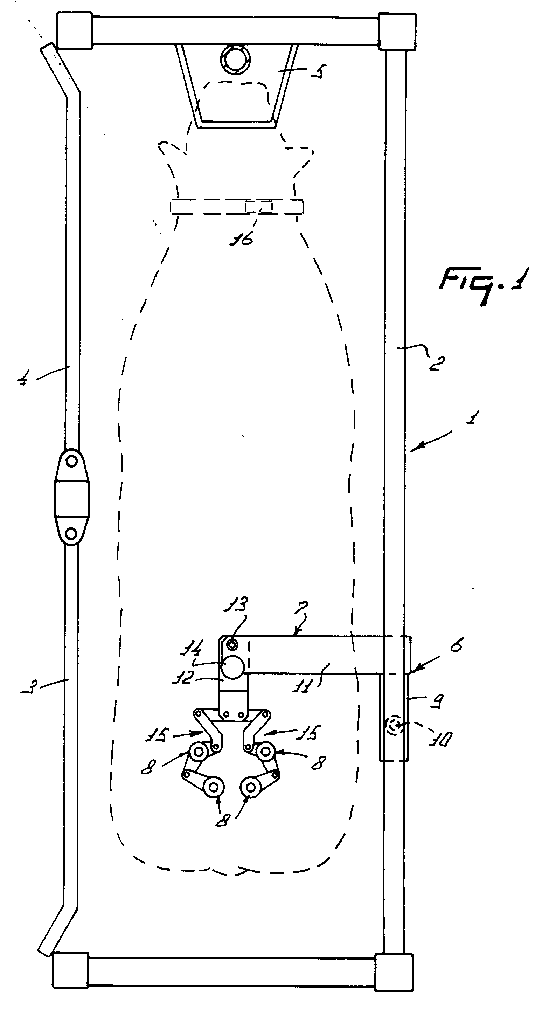

Figure 1 is a plan view of a milking box 1 which incorporates a railing 2 and at one side is provided with an entrance door 3 and an exit door 4. A feed trough 5 is secured to the railing 2 at the leading side of the milking box 1. A milking robot 6 is positioned at the side facing the entrance and exit door side. The milking robot 6 includes a robot arm 7, to the end of which the teat cups 8 are attached. The robot arm 7 is assembled from a first portion 9 which is rotatable about an upright shaft 10, a second portion 11 which extends substantially at a square angle to the first portion 9, and a third portion 12 which is rotatable about an upright shaft 13 and is connected to the other end of the second portion 11. The robot arm 7 can be moved in height as an integral whole by means of a cylinder, not further shown. On the third portion 12 there is provided a laser 14, with the aid of which the position of the teats of an animal to be milked is determined. Two pivotal arm constructions 15, each having two teat cups 8, are connected at the end of the third portion 12 to the third portion 12.

Round the neck of the cow there is further arranged a collar with a transponder 16 which forms part of a cow identification system, not further shown.

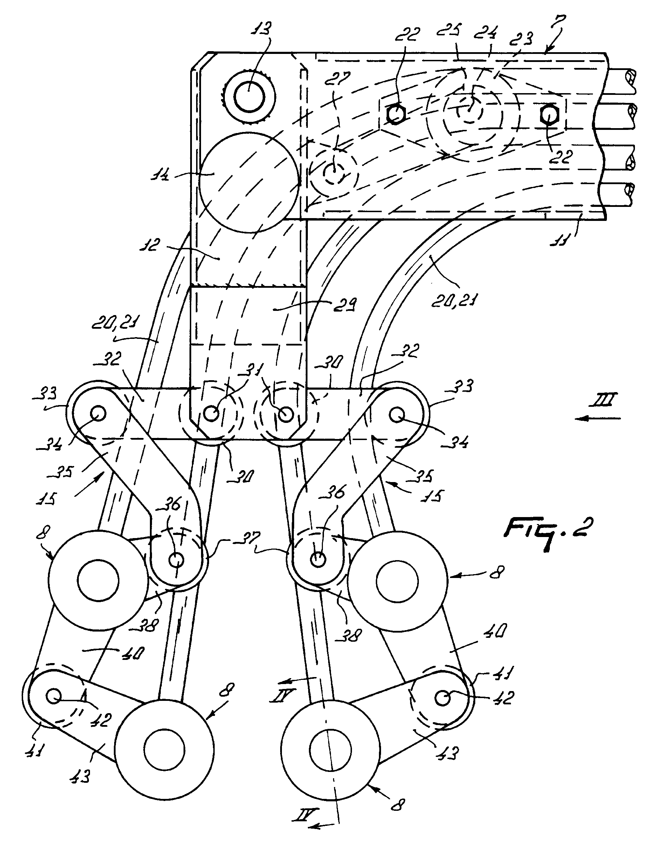

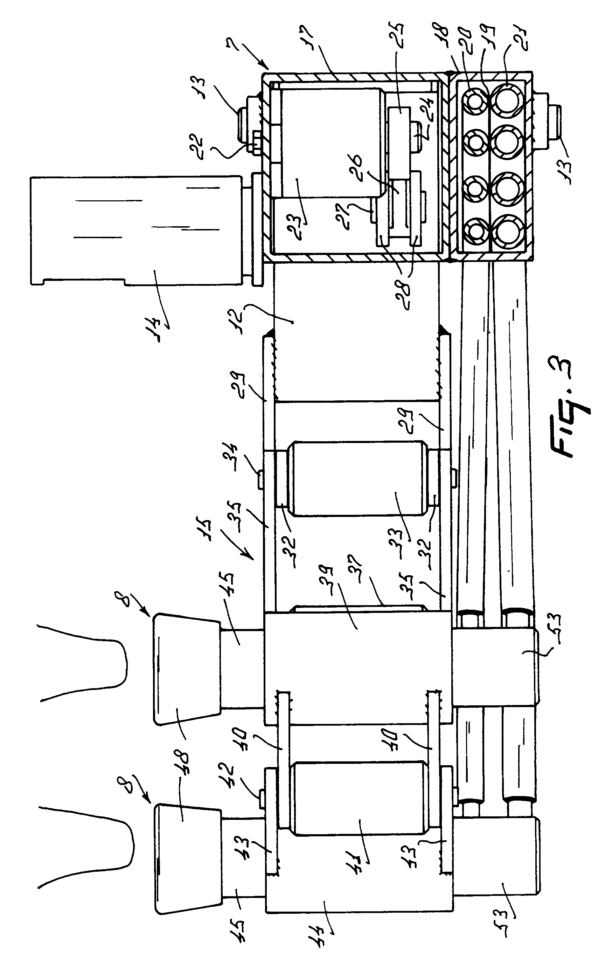

Figures 2 and 3 illustrate in detail the leading portion of the robot arm 7 with the pivotal arm constructions 15. The second portion 11 of the robot arm 7 is assembled from a first box-like beam 17 and therebelow a second box-like beam 18 (Figure 3). The second box-like beam 18 comprises two compartments which are separated by a partition 19. The pulsation tubes 20 of the teat cups 8 are stored in the upper compartment and the milk tubes 21 are stored in the lower compartment. In the first box-like beam 17 there is connected to the end by means of two screws 22 a stepping motor 23 which has a shaft 24, to which a disc 25 is rigidly and eccentrically secured. The eccentric disc 25 is bearing-supported in an arm 26, which has its other end placed pivotally about a shaft 27, which shaft 27 is connected to the third portion 12 by means of lugs 28. When the stepping motor is energized, the eccentric disc 25 forming part of an eccentric drive rotates, in response to which the arm 26 causes the third portion 12 to rotate about the shaft 13.

Strips 29 are attached to the upper and the lower side of the third portion 12. Two electric motors (stepping motors) 30 are arranged between the ends of the strips 29. At the lower and the upper side of an electric motor 30 a strip-like arm 32 is fitted on the shaft 31, which strip-like arms 32 are each rigidly connected by means of their other ends to a second stepping motor 33. The shafts 34 of the second stepping motors are each rigidly connected to two arms 35, which are rigidly connected by means of their other ends to a shaft 36 of a third stepping motor 37. The arms 35 are in the shape of a strip and include a first portion which linearly extends from the second stepping motor 33, as well as a second portion contiguous thereto, which encloses an angle with the first portion of the strip-like arm 35. The angle the first and the second portions of the strip-like arm 35 enclose is approximately 135°.

The third stepping motors 37 are connected at their lower and upper sides to a housing by means of two arms 38, whose other ends are connected to a cylindrical holder 39 surrounding a teat cup 8 (Figure 3). To each of the holders 39 there are attached two further arms 40, which together with the arms 38 enclose an angle of approximately 135°. At the other end of the arms 40, a fourth stepping motor 41 is rigidly secured between the arms 40. Rigidly connected to the shafts 42 of the fourth stepping motor 41 are the two strip-shaped arms 43, which have their other ends rigidly connected to a cylindrical holder 44 placed around a further teat cup 8.

By energizing the stepping motors 30, 33, 37 and 41 the arms 32, 35, 38, 40 and 43 rotate relative to each other and thus it is possible to move the teat cups 8 in a horizontal plane, with the intermediary of the pivotal arm constructions 15.

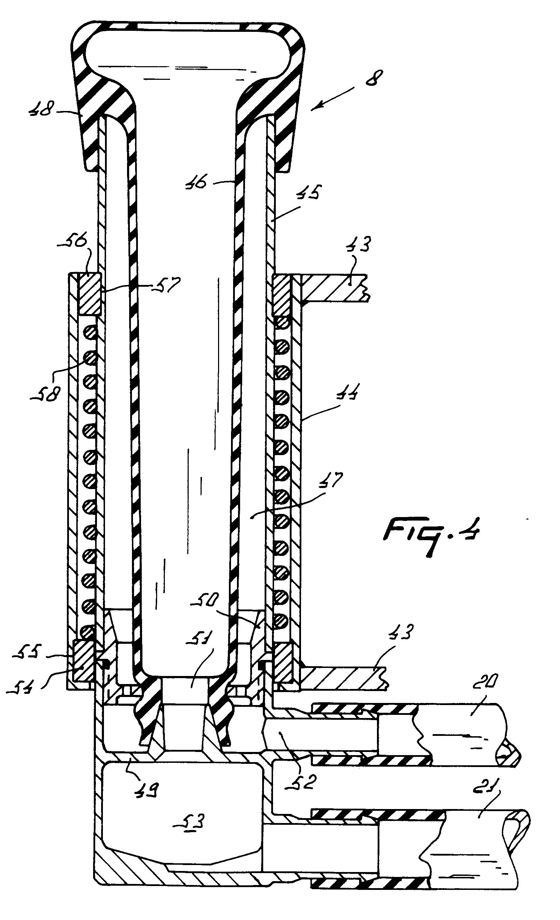

Figure 4 is a longitudinal cross-sectional view of a teat cup; this cup is assembled in customary manner from a fixed, e.g. metal, sleeve 45 having in its interior an inner wall 46 made of a flexible material, e.g. rubber, and a rubber cap 48 which seals at the upper side the intermediate space 47 between the sleeve 45 and the inner wall 46. The space between the sleeve 45 and the inner wall 46 is sealed at the bottom side by a washer 49, whilst thereabove, arranged between the sleeve 45 and the inner wall 46, there is present a ring 50 which has an aperture 51. Between the washer 49 and the ring 50 there is a space, in which via an aperture 52 a pulsating vacuum is developed by a pulsation system through the line 20, which in the space between the sleeve 45 and the inner wall 46 produces a pulsating vacuum which, when the teat cup 8 has been connected in the proper manner, causes the inner wall 46 to fit tightly around the teat and to move outwards again, respectively, so that the rhythmic motions around the teat required for milking are obtained. In the bottom part of the teat cup 8 there is furthermore a buffer space 53, which minimizes fluctuations in the vacuum.

Connected to this buffer space 53 there is the line 21 which is used for the discharge of milk and leads to a milk meter. The cylindrical holder 39 (44) is disposed around the sleeve 45 near the midway point of the teat cup 8. An annular sleeve bearing 54 is fitted near the bottom side of the holder 39 in a circular groove 55 in the holder 39 (44). In the region of the upper side of the cylindrical holder 39, a second annular sleeve bearing 56 is fitted in a circular groove 57 in the sleeve 45. The sleeve bearings 54 and 56 are preferably made of the durable Teflon. A compression spring 58 is confined between the sleeve bearings 54 and 56. The spring 58 has a spring rate which allows a teat cup 8 to be moved downwards relative to the holder 39 with a slight force. Since all four teat cups 8 are supported in a holder and each of the teat cups 8 is capable of being moved downwards against the action of a spring, it is possible to connect the teat cups 8 correctly to the teats of an animal to be milked, even when the teats are not located at the same level (a teat is enclosed along its full length by a teat cup).

The construction as described in the foregoing operates as follows:
After having entered the milk box 1 via the entrance door 3, the animal is identified by means of the transponder 16 and the cow identification system, not further shown. By means of the robot arm 7 the teat cups 8 are moved towards the teats, whilst with the aid of the laser 14 the coordinates of the teats are determined. On the basis of these coordinates, with the intermediary of the pivotal arm construction 15, the position of the teat cups 8 is altered (fine positioning). For this purpose, the stepping motors 23, 30, 33, 37 and 41 can be energized. When all four teat cups 8 are in the correct position, the robot arm 7 is moved upwards by means of a cylinder, not further shown, and all four teat cups 8 are simultaneously connected to the teats. When there is a difference in height between the teats, this difference in height is bridged in that a teat cup 8 is movable relative to its holder against the action of a spring. After the teat cups 8 have been connected to the teats or, if so desired, during the connection of the teat cups to the teats, the free-wheel device of each stepping motor 30, 33, 37 and 41 is released to provide that the teat cups 8 are freely movable in a horizontal plane. Thus, it is possible for the teat cups 8 to be adapted in a natural manner to the teat configuration. Also during milking, it is possible to have the free-wheel devices operative, so that when the animal moves, the teat cups 8 track the teats after they have changed their position. Thus, it is prevented that the teat cups 8 are inadvertently disconnected from the teats. Each of the stepping motors 23, 30, 33, 37 and 41 includes a responder (sensor), not further shown, which applies a signal to the computer about the position of a teat cup 8 connected to a teat. Each time an animal is milked, the teat configuration is determined in the computer and, if this configuration has changed with respect to a previous milking turn, it is replaced by the teat configuration determined last. The determination of the teat configuration can be effected both with the laser 14 and with the sensors disposed in the stepping motors 23, 30, 33, 37 and 41. When an animal starts a new lactation period, then the teat configuration determined last is not read from the memory, but the teat configuration determined at the beginning of the previous lactation period is read.

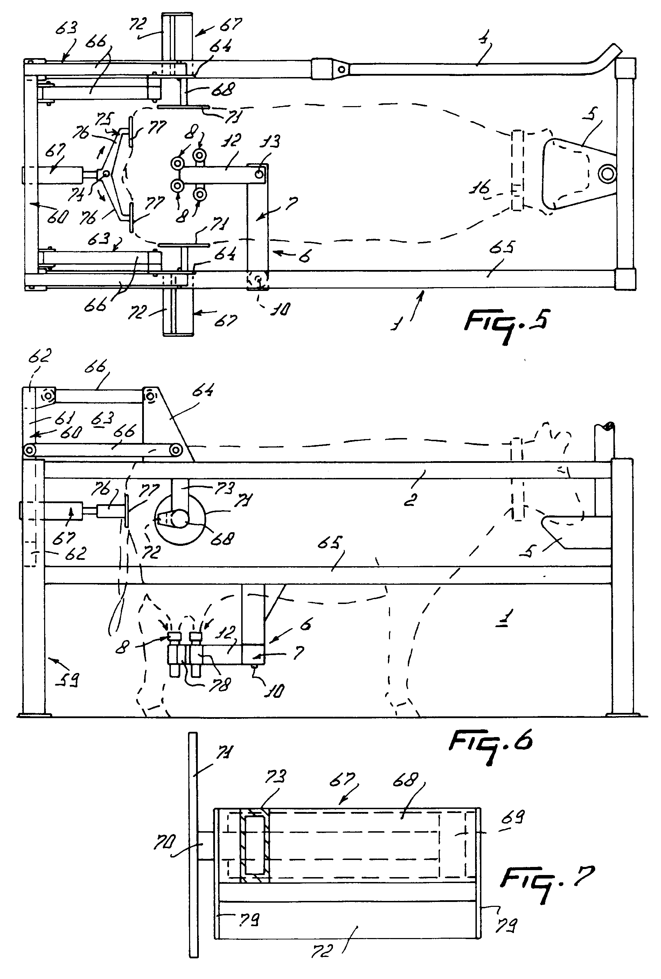

Figures 5 to 7 show a second embodiment of a milking box with a robot arm and detection means; in these drawings, corresponding components of the construction have been given the same reference numerals. In the embodiment of Figure 5, the entrance door 59 of the milking box 1 is formed by a movable rear wall 60 at the rear side of the milking box 1. The partition 60 is constituted by a frame consisting of two vertical tubes 61, between which spaced-apart cross beams 62 are arranged. The partition 60 is connected by means of two four-bar linkages 63, which are connected at one end to the upper cross beam 62, via struts 64 to the upper beam 65 of the railing 2 (Figure 6). The two four-bar linkages 63 each comprise two arms 66, the lower arm 66 of which has a length which exceeds the length of the upper arm 66. Using a cylinder, not further shown, which is connected to one of the arms 66 and has its other end connected to the railing 2, it is possible to pivot the partition 60 upwardly to above the railing 2, in order to allow an animal to enter the milking box 1. Attached to the entrance door 59 of the milking box 1 and to the two side walls of the milking box 1 there are arranged detection means 67, with the aid of which the position of at least a portion of an animal relative to a reference point can be determined. The detection means 67 include mechanical sensors 68, which are constituted by a pneumatic cylinder with a piston 69 and connected thereto a piston rod 70 which at its other end is provided with a round plate-shaped stop 71 (Figure 7). At the two ends of the pneumatic cylinder lugs 72 have been attached, between which, at some distance from the cylinder housing, an inductive telemeter 79 is disposed, with the aid of which the position of the piston 69 can be determined. At both sides of the milking box 1, the mechanical sensors 68 are connected via a beam 73 to the upper beam 65 of the railing 2 of the milking box 1. In the midway point of the lower cross beam 62 of the partition wall 60 there is also disposed a pneumatic cylinder 68 having a piston rod 70, at the end of which there is present a stop 75 which is rotatable about a shaft 74. The stop 75 includes two legs 76, each of which is provided at its end with a round plate 77.

Figures 5 and 6 further schematically illustrate a milking robot 6 having a robot arm 7 which is rotatable about a first vertical shaft 10, as well as about a second vertical shaft 13, whilst the robot arm can also be moved in height with the aid of a cylinder, not further shown. Rotation about the shafts 10 and 13 is effected in a similar manner as described for the first embodiment. The end of the third beam 12 of the robot arm 7 also carries four teat cups 8. Each of the teat cups 8 is supported in a holder 78. As was described for the previous embodiment, the holders 78 may be accommodated in a pivotal arm construction 15 for the purpose of positioning the cups relative to each other in a horizontal plane. It is, however, alternatively possible for the holders 78 to be rigidly connected to the third beam 12. The holders 78 may be of a construction with and also without a spring 58.

In addition, each of the teat cups 8 is connected to an air pump, not further shown, by means of which, at least for coupling the teat cups 8 to the teats of an animal to be milked, a relatively strong suction air stream is applied in the vicinity of and above the apertures thereof. In this situation, the additional air pump may be connected to each of the milk tubes 21, but it is alternatively possible that a third tube, not further shown, is connected to each of the teat cups 8 for the purpose of establishing a strong underpressure in each of the teat cups 8.

The construction according to the second embodiment operates as follows:
After an animal has entered the milking box 1 through the entrance door 59, then the identity of the animal is determined via the transponder 16. Thereafter the detection means 67 are actuated and the stops 71 and 75 of the mechanical sensors are pressed against the animal. On the basis of the positions of the pistons 69 of the mechanical sensors and the data supplied by the cow identification system, the position of the teats of the relevant animal can be determined with a reasonable accuracy. Thereafter, by means of the robot arm 7, the teat cups 8 are positioned under the teats. After the teat cups 8 have been positioned, the additional air pump is switched on, as a result of which a relatively strong suction air stream is applied near and above the apertures of the teat cups 8. During the upward motion of the robot arm 7 the teat cups are sucked, under the influence of the suction air stream, to the teats and/or the teats to the teat cups 8. After it has been ascertained by means of a sensor, not further shown, that a teat cup 8 has been connected to a teat, the additional air suction stream in the relevant teat cup 8 is interrupted, whereafter the milking operation can be started. As also in the first embodiment, the position of the connected teat cups can thereafter be checked again and optionally be changed.

It will be obvious that, in this embodiment, it is possible to use a laser 14 instead of the mechanical sensors 68.

## Claims

1. A construction for milking animals, such as cows, comprising a milking robot (6) with teat cups (8), characterized in that two teat cups (8) are interconnected by means of a hinge, one of the two teat cups (8) being pivotally attached to a robot arm (7) by means of two pivotally interconnected arms (32, 35).

2. A construction as claimed in claim 1, characterized in that the pivotal arm (35), which is not directly connected to the robot arm (7), extends in a horizontal plane.

3. A construction as claimed in claim 1 or 2, characterized in that one pair of teat cups (8) is connected by means of one pivotal arm construction (15) to the robot arm (7), a pivotal arm construction (15) being further provided with electric motors (30; 33; 37; 41), with the aid of which the position of the relevant teat cups (8) can be altered in a mainly horizontal plane.

4. A construction as claimed in any one of claims 1 to 3, characterized in that the milking robot (6) includes detection means (14), with the aid of which the position of the teats of an animal to be milked can be determined, it being possible to alter the position of the teat cups (8) on the basis of these data, using the pivotal arm construction (15).

5. A construction as claimed in claim 4, characterized in that the detection means (14) comprise a laser.

6. A construction as claimed in any one of the preceding claims, characterized in that a pivotal arm, by means of which a teat cup (8) is pivoted, is connected to a stepping motor (30; 33; 37; 41), whilst the shaft (31; 34; 38; 42) of the stepping motor (30; 33; 37; 41) is connected to a pivotal arm (32; 35; 40; 43) other than the said first arm.

7. A construction as claimed in any one of the preceding claims, characterized in that each of the stepping motors (30; 33; 37; 41) includes a free-wheel device, which becomes operative for a stepping motor (30; 33; 37; 41) after a computer has supplied a signal indicating that a relevant teat cup (8) has been connected.

8. A construction as claimed in any one of the preceding claims, characterized in that the construction includes an operating cylinder, with the aid of which the teat cups (8) are connected to the teats simultaneously.

9. A construction as claimed in any one of the preceding claims, characterized in that each of the pivotal arms (32; 35; 40; 43) is constituted by two spaced-apart strips.

10. A construction as claimed in claim 9, characterized in that a stepping motor (30; 33; 37; 41) is disposed between these strips at least one end of a pair of strips.

11. A construction as claimed in claim 9 or 10, characterized in that the robot arm (7) comprises four teat cups (8), two teat cups (8) of which each include two pairs of strips.

12. A construction as claimed in any one of claims 9 to 11, characterized in that the strips have one end connected to a holder (39; 44) surrounding a teat cup (8).

13. A construction as claimed in claim 12, characterized in that the holder (39; 44) is of a cylindrical shape and is arranged near the centre point around a teat cup (8), the length of the holder (39; 44) being less than the length of a teat cup (8).

14. A construction as claimed in claim 12 or 13, characterized in that a teat cup (8) is movable in height relative to the associated holder (39; 44).

15. A construction as claimed in claim 14, characterized in that a teat cup (8) can be moved against the action of a spring (58).

16. A construction as claimed in claim 15, characterized in that a sleeve bearing (54) is rigidly attached to the holder (39; 44) near the lower side thereof, and nearer to the top a further sleeve bearing (56) is rigidly attached to the teat cup (8).

17. A construction as claimed in claim 16, characterized in that a compression spring (58) is confined between the sleeve bearings (54; 56).

18. A construction as claimed in claim 16 or 17, characterized in that a sleeve bearing (54; 56) is lined with Teflon.

19. A construction as claimed in any one of the preceding claims, characterized in that the robot arm (7) includes a first portion (9) which is pivotal about an upwardly extending shaft (10), as well as a second portion (11) which is arranged at a substantially square angle to the first portion (9) and a third portion (12) which is pivotal about an upright shaft (13) and is connected to the other end of the second portion (11).

20. A construction as claimed in claim 19, characterized in that between the second (11) and the third portion (12) of the robot arm there are arranged adjusting means which include a stepping motor (23) driving an eccentric (25) which is connected via an arm (26) to a portion of the robot arm (7) other than the portion to which the stepping motor (23) is attached.

21. A construction as claimed in claim 19 or 20, characterized in that the detection means (14) are disposed on the third portion (12) of the robot arm (7).

## Patentansprüche

1. Vorrichtung zum Melken von Tieren, wie z. B. Kühen, mit einem Melkroboter (6) mit Zitzenbechern (8),
dadurch gekennzeichnet, daß zwei Zitzenbecher (8) durch ein Gelenk miteinander verbunden sind, wobei einer der beiden Zitzenbecher (8) durch zwei schwenkbar miteinander verbundene Arme (32, 35) schwenkbar an einem Roboterarm (7) angebracht ist.

2. Vorrichtung nach Anspruch 1,
dadurch gekennzeichnet, daß sich der Schwenkarm (35), der nicht unmittelbar mit dem Roboterarm (7) verbunden ist, in einer horizontalen Ebene erstreckt.

3. Vorrichtung nach Anspruch 1 oder 2,
dadurch gekennzeichnet, daß ein Paar von Zitzenbechern (8) mittels einer Schwenkvorrichtung (15) mit dem Roboterarm (7) verbunden ist, wobei eine Schwenkvorrichtung (15) außerdem Elektromotoren (30; 33; 37; 41) aufweist, mittels derer die Position der zugehörigen Zitzenbecher (8) in einer überwiegend horizontalen Ebene veränderbar ist.

4. Vorrichtung nach einem der Ansprüche 1 bis 3,
dadurch gekennzeichnet, daß der Melkroboter (6) eine Ermittlungseinrichtung (14) aufweist, mittels der die Position der Zitzen eines zu melkenden Tieres feststellbar ist, wobei die Möglichkeit besteht, die Position der Zitzenbecher (8) auf der Basis dieser Daten unter Verwendung der Schwenkvorrichtung (15) zu verändern.

5. Vorrichtung nach Anspruch 4,
dadurch gekennzeichnet, daß die Ermittlungseinrichtung (14) einen Laser umfaßt.

6. Vorrichtung nach einem der vorhergehenden Ansprüche,
dadurch gekennzeichnet, daß ein Schwenkarm, mittels dessen ein Zitzenbecher (8) geschwenkt wird, mit einem Schrittmotor (30; 33; 37; 41) verbunden ist, wobei die Welle (31; 34; 36; 42) des Schrittmotors (30; 33; 37; 41) mit einem Schwenkarm (32; 35; 40; 43) verbunden ist, der nicht mit dem ersten Arm identisch ist.

7. Vorrichtung nach einem der vorhergehenden Ansprüche,
dadurch gekennzeichnet, daß jeder Schrittmotor (30; 33; 37; 41) eine Freilaufvorrichtung enthält, die bei einem Schrittmotor (30; 33; 37; 41) aktiviert wird, nachdem ein Computer ein Signal geliefert hat, welches anzeigt, daß ein zugehöriger Zitzenbecher (8) angeschlossen worden ist.

8. Vorrichtung nach einem der vorhergehenden Ansprüche,
dadurch gekennzeichnet, daß die Vorrichtung einen Arbeitszylinder aufweist, mit dessen Hilfe die Zitzenbecher (8) gleichzeitig an die Zitzen angeschlossen werden.

9. Vorrichtung nach einem der vorhergehenden Ansprüche,
dadurch gekennzeichnet, daß jeder Schwenkarm (32; 35; 40; 43) durch zwei mit Abstand angeordnete Flachteile gebildet ist.

10. Vorrichtung nach Anspruch 9,
dadurch gekennzeichnet, daß ein Schrittmotor (30; 33; 37; 41) zwischen diesen Flachteilen an mindestens einem Ende eines Paares von Flachteilen angeordnet ist.

11. Vorrichtung nach Anspruch 9 oder 10,
dadurch gekennzeichnet, daß der Roboterarm (7) vier Zitzenbecher (8) aufweist, von denen zwei Zitzenbecher (8) jeweils zwei Paare von Flachteilen aufweisen.

12. Vorrichtung nach einem der Ansprüche 9 bis 11,
dadurch gekennzeichnet, daß die Flachteile an einem Ende mit einem einen Zitzenbecher (8) umgreifenden Halter (39; 44) verbunden sind.

13. Vorrichtung nach Anspruch 12,
dadurch gekennzeichnet, daß der Halter (39; 44) von zylindrischer Form und nahe der Mitte an einem Zitzenbecher (8) angeordnet ist, wobei die Länge des Halters (39; 44) geringer ist als die Länge eines Zitzenbechers (8).

14. Vorrichtung nach Anspruch 12 oder 13,
dadurch gekennzeichnet, daß ein Zitzenbecher (8) relativ zu dem entsprechenden Halter (39; 44) höhenbewegbar ist.

15. Vorrichtung nach Anspruch 14,
dadurch gekennzeichnet, daß ein Zitzenbecher (8) gegen die Kraft einer Feder (58) bewegbar ist.

16. Vorrichtung nach Anspruch 15,
dadurch gekennzeichnet, daß ein Gleitlager (54) an dem Halter (39; 44) nahe dessen unterem Ende starr befestigt ist, und daß näher am oberen Ende ein weiteres Gleitlager (56) an dem Zitzenbecher (8) starr befestigt ist.

17. Vorrichtung nach Anspruch 16,
dadurch gekennzeichnet, daß eine Druckfeder (58) zwischen den Gleitlagern (54; 56) gehalten ist.

18. Vorrichtung nach Anspruch 16 oder 17,
dadurch gekennzeichnet, daß ein Gleitlager (54; 56) mit Teflon ausgekleidet ist.

19. Vorrichtung nach einem der vorhergehenden Ansprüche,
dadurch gekennzeichnet, daß der Roboterarm (7) einen ersten Abschnitt (9) aufweist, der um eine aufwärts gerichtete Achse (10) drehbar ist, sowie einen zweiten Abschnitt (11), der im wesentlichen rechtwinklig zum ersten Abschnitt (9) angeordnet ist, und einen dritten Abschnitt (12), der um eine aufrechte Achse (13) drehbar und mit dem anderen Ende des zweiten Abschnittes (11) verbunden ist.

20. Vorrichtung nach Anspruch 19,
dadurch gekennzeichnet, daß zwischen dem Zweiten Abschnitt (11) und dem dritten Abschnitt (12) des Roboterarmes Stellmittel mit einem Schrittmotor (23) angeordnet sind, der einen Exzenter (25) antreibt, welcher über einen Arm (26) mit einem Abschnitt des Roboterarmes (7) verbunden ist, der nicht identisch mit dem Abschnitt ist, an dem der Schrittmotor (23) angebracht ist..

21. Vorrichtung nach Anspruch 19 oder 20,
dadurch gekennzeichnet, daß die Ermittlungseinrichtung (14) am dritten Abschnitt (12) des Roboterarmes (7) angeordnet ist.

## Revendications

1. Dispositif pour la traite d'animaux, tels que des vaches, comportant un robot de traite (6) ayant des gobelets trayeurs (8), caractérisé en ce que deux gobelets trayeurs (8) sont reliés mutuellement par l'intermédiaire d'une articulation, un premier des deux gobelets trayeurs (8) étant relié de manière pivotante à un bras de robot (7) par l'intermédiaire de deux bras reliés mutuellement de manière pivotante (32, 35).

2. Dispositif selon la revendication 1, caractérisé en ce que le bras pivotant (35), qui n'est pas directement relié au bras de robot (7), s'étend dans un plan horizontal.

3. Dispositif selon la revendication 1 ou 2, caractérisé en ce qu'une paire de gobelets trayeurs (8) est connectée par l'intermédiaire du dispositif de bras pivotant (15) au bras de robot (7), le dispositif de bras pivotant (15) étant en outre muni de moteurs électriques (30 ; 33 ; 37 ; 41), à l'aide desquels la position des gobelets trayeurs concernés (8) peut être modifiée dans un plan principalement horizontal.

4. Dispositif selon l'une quelconque des revendications 1 à 3, caractérisé en ce que le robot de traite (6) comporte des moyens de détection (14) à l'aide desquels la position des trayons d'un animal à traire peut être déterminée, étant possible de modifier la position des gobelets trayeurs (8) sur la base de cette donnée, en utilisant le dispositif de bras pivotant (15).

5. Dispositif selon la revendication 4, caractérisé en ce que les moyens de détection (14) sont constitués d'un laser.

6. Dispositif selon l'une quelconque des revendications précédentes, caractérisé en ce qu'un bras pivotant, par l'intermédiaire duquel un gobelet trayeur (8) est mis à pivoter, est relié à un moteur pas-à-pas (30 ; 33 ; 37 ; 41), alors que l'arbre (31 ; 34 ; 38 ; 42) du moteur pas-à-pas (30 ; 33 ; 37 ; 41) est relié à un bras pivotant (32 ; 35 ; 40 ; 43) autre que ledit premier bras.

7. Dispositif selon l'une quelconque des revendications précédentes, caractérisé en ce que chacun des moteurs pas-à-pas (30 ; 33 ; 37 ; 41) comporte un dispositif à roue libre, qui devient actif pour un moteur pas-à-pas (30 ; 33 ; 37 ; 41) après qu'un ordinateur ait envoyé un signal indiquant qu'un gobelet trayeur concerné (8) a été connecté.

8. Dispositif selon l'une quelconque des revendications précédentes, caractérisé en ce que le dispositif comporte un vérin d'actionnement, à l'aide duquel les gobelets trayeurs (8) sont connectés simultanément aux trayons.

9. Dispositif selon l'une quelconque des revendications précédentes, caractérisé en ce que chacun des bras pivotants (32 ; 35 ; 40 ; 43) est constitué par deux bandes écartées.

10. Dispositif selon la revendication 9, caractérisé en ce qu'un moteur pas-à-pas (30 ; 33 ; 37 ; 41) est disposé entre ces bandes au niveau d'au moins une extrémité d'une paire de bandes.

11. Dispositif selon la revendication 9 ou 10, caractérisé en ce que le bras de robot (7) comporte quatre gobelets trayeurs (8), dont deux gobelets trayeurs (8) comportent chacun deux paires de bandes.

12. Dispositif selon l'une quelconque des revendications 9 à 11, caractérisé en ce que les bandes ont une première extrémité reliée à un support (39 ; 44) entourant un gobelet trayeur (8).

13. Dispositif selon la revendication 12, caractérisé en ce que le support (39 ; 44) a une forme cylindrique et est agencé à proximité du point central autour d'un gobelet trayeur (8), la longueur du support (39 ; 44) étant plus petite que la longueur d'un gobelet trayeur (8).

14. Dispositif selon la revendication 12 ou 13, caractérisé en ce qu'un gobelet trayeur (8) est mobile en hauteur par rapport au support associé (39 ; 44).

15. Dispositif selon la revendication 14, caractérisé en ce qu'un gobelet trayeur (8) peut être déplacé à l'encontre d'un ressort (58).

16. Dispositif selon la revendication 15, caractérisé en ce qu'un palier formant manchon (54) est fixé de manière rigide sur le support (39 ; 44) à proximité du côté inférieur de celui-ci, et, plus près de la partie supérieure, un autre palier formant manchon (56) est fixé de manière rigide sur le gobelet trayeur (8).

17. Dispositif selon la revendication 16, caractérisé en ce qu'un ressort de compression (58) est confiné entre les paliers formant manchon (54 ; 56).

18. Dispositif selon la revendication 16 ou 17, caractérisé en ce qu'un palier formant manchon (54 ; 56) est revêtu de Téflon.

19. Dispositif selon l'une quelconque des revendications précédentes, caractérisé en ce que le bras de robot (7) comporte une première partie (9) qui est pivotante autour d'un arbre s'étendant verticalement (10) ainsi qu'une deuxième partie (11) qui est agencée selon un angle pratiquement droit par rapport à la première partie (9) et une troisième partie (12) qui est pivotante autour d'un arbre vertical (13) et est reliée à l'autre extrémité de la deuxième partie (11).

20. Dispositif selon la revendication 19, caractérisé en ce qu'entre la deuxième (11) et la troisième partie (12) du bras de robot sont agencés des moyens d'ajustement qui comportent un moteur pas-à-pas (23) entraînant un excentrique (25) qui est relie via un bras (26) à une partie du bras de robot (7) autre que la partie sur laquelle le moteur pas-à-pas (23) est fixé.

21. Dispositif selon la revendication 19 ou 20, caractérisé en ce que les moyens de détection (14) sont disposés sur la troisième partie (12) du bras de robot (7).
